Europäisches Patentamt

European Patent Office

Office européen des brevets

(19)

(11) **EP 0 791 823 A2**

(12) **EUROPÄISCHE PATENTANMELDUNG**

(43) Veröffentlichungstag:
27.08.1997 Patentblatt 1997/35

(51) Int. Cl.$^6$: **G01N 22/00**, A24B 3/00

(21) Anmeldenummer: 97102166.2

(22) Anmeldetag: 12.02.1997

(84) Benannte Vertragsstaaten:
**AT BE CH DE ES FR GB IT LI NL SE**

(30) Priorität: **20.02.1996 DE 19606183**

(71) Anmelder:
**Hauni Maschinenbau Aktiengesellschaft
D-21033 Hamburg (DE)**

(72) Erfinder:
- **Möller, Henning, Dr.
22605 Hamburg (DE)**
- **Tobias, Jörg
21423 Drage (DE)**
- **Noack, Andreas
22159 Hamburg (DE)**

(54) **Verfahren und Anordnung zum Erfassen mindestens einer Eigenschaft eines Stoffes**

(57) Beschrieben werden ein Verfahren und eine Anordnung zum Erfassen mindestens einer Eigenschaft eines Stoffes durch Auswertung der durch die Anwesenheit des Stoffes verursachten Verstimmung eines HF-Resonators, dem Mikrowellen zugeführt werden, und von dem ein hochfrequentes, von dem Stoff beeinflußtes Signal abgenommen wird, dessen Resonanzfrequenz-Verschiebung und dessen Dämpfung gegenüber einem von dem Stoff unbeeinflußten Signal erfaßt wird.

Der Zweck der Erfassung der Eigenschaften besteht insbesondere darin, von Stoffen, insbesondere halbleitenden Stoffen wie Tabak, Signale zu gewinnen, die weiter zu der Feuchtmasse und/oder der Trockenmasse des Stoffes oder zu seiner Dielektrizitätskonstanten entsprechenden Signalen weiterverarbeitet

werden können.

Gelöst wird diese Aufgabe dadurch, daß dem Resonator Mikrowellen mit mindestens zwei unterschiedlichen Frequenzen zugeführt werden, daß die Resonanzfrequenz-Verschiebungen durch Vergleich der von dem Stoff unbeeinflußten und beeinflußten Resonanzkurven des Resonators erfaßt werden, und daß die Dämpfung durch Vergleich der Amplituden der Resonanzkurven bei den Frequenzen der zugeführten Mikrowellen erfaßt wird.

Durch das beschriebene Verfahren und die Anordnung lassen sich schnell bewegte Mengenströme von Stoffen der obengenannten Art schnell und genau erfassen.

Fig. 1

**Beschreibung**

Die Erfindung betrifft ein Verfahren zum Erfassen mindestens einer Eigenschaft eines Stoffes durch Auswertung der durch die Anwesenheit des Stoffes verursachten Verstimmung eines HF-Resonators, dem Mikrowellen zugeführt werden, und von dem ein hochfrequentes, von dem Stoff beeinflußtes Signal abgenommen wird, dessen Resonanzfrequenz-Verschiebung und Dämpfung gegenüber einem von dem Stoff unbeeinflußten Signal erfaßt wird.

Die Erfindung betrifft außerdem eine Anordnung zum Erfassen mindestens einer Eigenschaft eines Stoffes, mit einem Resonator, dem von einem Generator Mikrowellen zuführbar sind, und von dem ein hochfrequentes von dem Stoff beeinflußtes Signal zum Erfassen seiner Resonanzfrequenz-Verschiebung und Dämpfung gegenüber dem von dem Stoff unbeeinflußten Signal abnehmbar und einer Auswertschaltung zuführbar ist.

Bei der Tabakverarbeitung, insbesondere bei der Zigarettenherstellung, ist die Erfassung von Tabak-Mengenströmen bezüglich der Tabakmasse je Mengestromeinheit und/oder der Tabakfeuchte wichtig. Manchmal ist auch die Erfassung der Dielektrizitätskonstanten des Tabaks erwünscht.

Aus den Anteilen der Trocken- und Feuchtmassen läßt sich durch Summierung entsprechender Meßsignale dann auch auf die Gesamtmasse des Mengenstromes schließen. Besonders interessant sind die Feuchte- und Massebestimmungen auch für Nahrungsmittel, Chemikalien, Textilien, Papier und dergleichen.

Es sind Verfahren und Anordnungen der eingangs genannten Art bekannt, z. B. durch die DE-PS 40 04 119, bei denen die Feuchte von Stoffen durch Zuführen von Mikrowellen zu einem Hohlraumresonator erfaßt wird. Hierbei erlaubt eine bestimmte Auswahl des Feldverlaufes des Hohlraumresonators im Bereich einer zu untersuchenden Probe, Materialfeuchte und Materialdichte unabhängig voneinander für ein bekanntes Material unter Verwendung einer Kalibrationskurve zu bestimmen, wobei die durch Abfahren der Resonanzkurve ermittelte Resonanzfrequenz und die Halbwertsbreite der Resonanzlinie bestimmt und ausgewertet werden.

Die der Erfindung zugrundeliegende Aufgabe besteht darin, die Eigenschaften der zu vermessenden Stoffe schnell und genau zu erfassen. Entsprechende Meßsignale können insbesondere zur Bestimmung von Teilmengen (z. B. Feuchtemenge oder Trockenmenge) oder von Gesamtmengen von Stoffen, z. B. eines bewegten Stranges der tabakverarbeitenden Industrie, insbesondere eines Zigaretten- oder Filterstranges, verwendet werden.

Nach dem Verfahren gemäß der Erfindung erreicht man dies dadurch, daß dem Resonator Mikrowellen mit mindestens zwei unterschiedlichen Frequenzen zugeführt werden, daß die Resonanzfrequenz-Verschiebungen durch Vergleich der von dem Stoff unbeeinflußten und beeinflußten Resonanzkurven des Resonators erfaßt werden und daß die Dämpfung durch Vergleich der Amplituden der Resonanzkurven bei den Frequenzen der zugeführten Mikrowellen erfaßt wird.

Weitere Verfahrensschritte sowie Weiterbildungen und weitere Ausgestaltungen der Erfindung sind den untergeordneten Verfahrensansprüchen zu entnehmen.

Die eingangs genannte Anordnung ist gekennzeichnet durch eine Zufuhr von Mikrowellen mit mindestens zwei unterschiedlichen Frequenzen von dem Generator zu dem Resonator und durch Resonanzfrequenz-Verschiebungen durch Vergleich der von dem Stoff beeinflußten Resonanzkurve gegenüber der von dem Stoff unbeeinflußten Resonanzkurve sowie die Dämpfung durch Vergleich der Amplituden der von dem Stoff beeinflußten und unbeeinflußten Resonanzkurven erfassenden Schaltungsanordnung.

Weiterbildungen und weitere Ausgestaltungen der Anordnung gemäß der Erfindung sind den untergeordneten Anordnungsansprüchen zu entnehmen.

Der mit der Erfindung verbundene Vorteil besteht darin, daß eine schnelle und genaue sogenannte "on-line" Erfassung der eingangs genannten Größen insbesondere von mit hohen Geschwindigkeiten geförderten Strängen der tabakverarbeitenden Industrie (Tabak, Filtermaterial) möglich ist.

In der Zeichnung wird die Erfindung anhand von Ausführungsbeispielen näher erläutert.

Es zeigen:

Figur 1     eine Schaltungsanordnung zum Erfassen von Größen eines Stoffes mit einer im Schnitt dargestellten von einem Zigarettenstrang durchsetzten Resonatoranordnung, der Mikrowellensignale zweier unterschiedlicher Frequenzen abwechselnd zugeführt sind,

Figur 2     den Verlauf der Resonanzkurven bei leerer und gefüllter Resonatoranordnung gemäß Figur 1 entsprechend der Schaltungsanordnung nach Figur 1,

Figur 3     eine Schaltungsanordnung zum Erfassen von Größen eines Stoffes mit einer Resonatoranordnung gemäß Figur 1, der ein gewobbeltes Mikrowellensignal zugeführt ist,

Figur 4     den Verlauf der Resonatorkurven bei leerer und gefüllter Resonatoranordnung gemäß Figur 1 entsprechend der Schaltungsanordnung nach Figur 3,

Figur 5     eine Schaltungsanordnung zum Erfassen der Trockenmasse und/oder der Feuchtmasse von Inkrementen eines mit einem Zigarettenpapierstreifen umhüllten Tabakmengenstromes (Zigarettenstrang),

Figur 6    eine Schaltungsanordnung zum Erfassen der Dielektrizitätskonstanten von Inkrementen eines Zigarettenstranges,

Figur 7    eine Schaltunganordnung zum Erfassen von Größen eines Stoffes mit einer Resonatoranordnung gemäß Figur 1, der drei durch Modulation eines Mikrowellensignals erzeugte Signalfrequenzen zugeführt sind,

Figur 8    den Verlauf des modulierten Mikrowellensignals,

Figur 9    den Verlauf der Resonanzkurven bei leerer und gefüllter Resonatoranordnung gemäß Figur 1 entsprechend der Schaltungsanordnung nach Figur 7,

Figur 10    eine Schaltungsanordnung zum Erzeugen von zwei der Resonatoranordnung zugeführten Mikrowellensignalen durch Modulation und Erfassen charakteristischer Größen durch Frequenzuntersetzung.

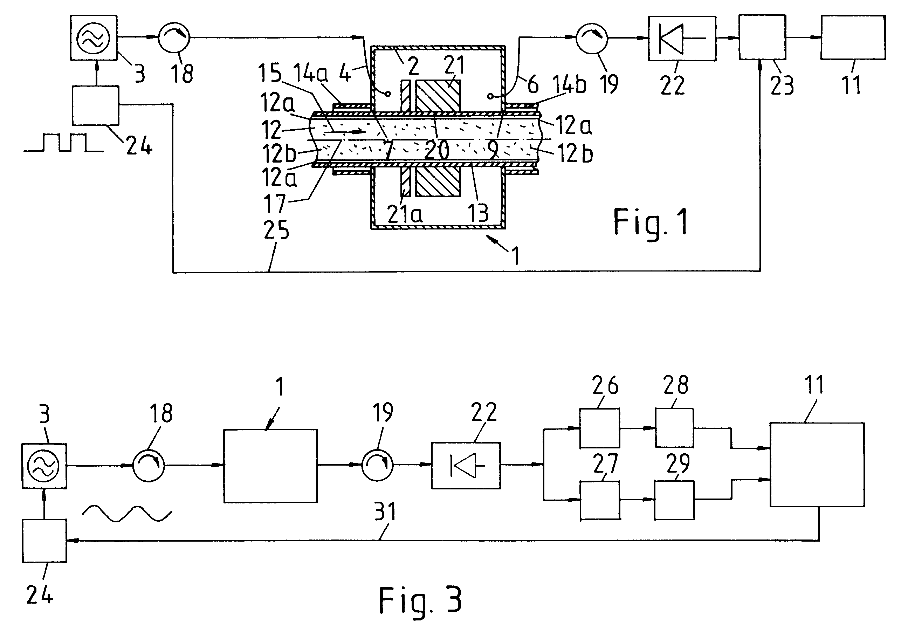

Figur 1 zeigt eine Hochfrequenz(HF)-Resonatoranordnung 1 gemäß der Erfindung, die einen Resonator 21 innerhalb eines im Schnitt dargestellten Gehäuses 2 aufweist. Das Gehäuse 2 ist rotationssymmetrisch, in dem Beispiel zylinderförmig, ausgebildet und besteht aus elektrisch leitendem Material wie Kupfer. Es kann aber auch andere rotationssymmetrische Formen oder davon abweichende Formen, z. B. die Form von Polygonen aufweisen und aus anderem Material bestehen. Zur Einkopplung eines elektromagnetischen Hochfrequenz(HF)Signals, vorzugsweise eines Mikrowellensignals, von einem Generator 3 und zur Auskopplung des HF-Feldes (Mikrowellen) zu einer Auswertanordnung 11 dienen bekannte Koaxialkabel 4 bzw. 6, die nicht dargestellte aber bekannte Koppelschleifen aufweisen. Der aus dielektrischem Material wie Keramik oder Kunststoff mit hoher Dielektrizitätskonstante (z. B. aus $BaO\text{-}PbO\text{-}Nd_2\,O_3\text{-}TiO_2$) bestehende Resonator 21 ist als Hohlzylinder ausgebildet und durch nicht dargestellte Abstandshalter in dem Gehäuse 2 fixiert. Er weist einen Teil 21a auf, der relativ zu ihm verschiebbar ist, z. B. um die Resonanzfrequenz ermitteln und/oder einstellen zu können. Durch den dielektrischen Resonator 21 kann die Empfindlichkeit und Genauigkeit der Messung erhöht werden.

Das Gehäuse 2 weist eine Einlaßöffnung 7 sowie eine Auslaßöffnung 9 auf. Ein Zigarettenstrang 12, bestehend aus von Umhüllungsmaterial 12a (insbesondere einem Zigarettenpapierstreifen) umgebenem Rauchmaterial 12b (insbesondere einem Strang aus Tabakfasern), von dem nach Verlassen des Gehäuses 2 in bekannter Weise Zigaretten abgeschnitten werden, wird zur Erfassung seiner Trockenmasse und/oder Feuchtmasse und/oder Gesamtmasse oder seiner Dielektrizitätskonstanten in einer rohrförmigen Führung 13 aus elektrisch nichtleitendem Material, z. B. Quarz, entsprechend dem Pfeil 15 durch das Gehäuse 2 geführt. Hierdurch wird vermieden, daß Tabakteilchen, Staub oder dgl. in das Gehäuse 2 gelangen und dabei Störungen verursachen. Rohrförmige Stutzen 14a, 14b aus leitfähigem Material wie Metall verhindern ein Abstrahlen des Hochfrequenzfeldes in störendem Ausmaß durch die Ein- und Auslaßöffnungen des Gehäuses 2.

Durch die besondere konzentrische Anordnung der Führung 13 und damit des Zigarettenstranges 12 bezüglich der Gehäuseachse 17 und dem Resonator 21 ergibt sich ein symmetrischer Aufbau mit optimalen Meßeigenschaften. Da die Führung 13 und damit der Zigarettenstrang 12 durch einen Durchlaß 20 hindurch den Resonator 21 durchsetzt, wird die Empfindlichkeit und Genauigkeit der Messung am Zigarettenstrang 12 noch erhöht.

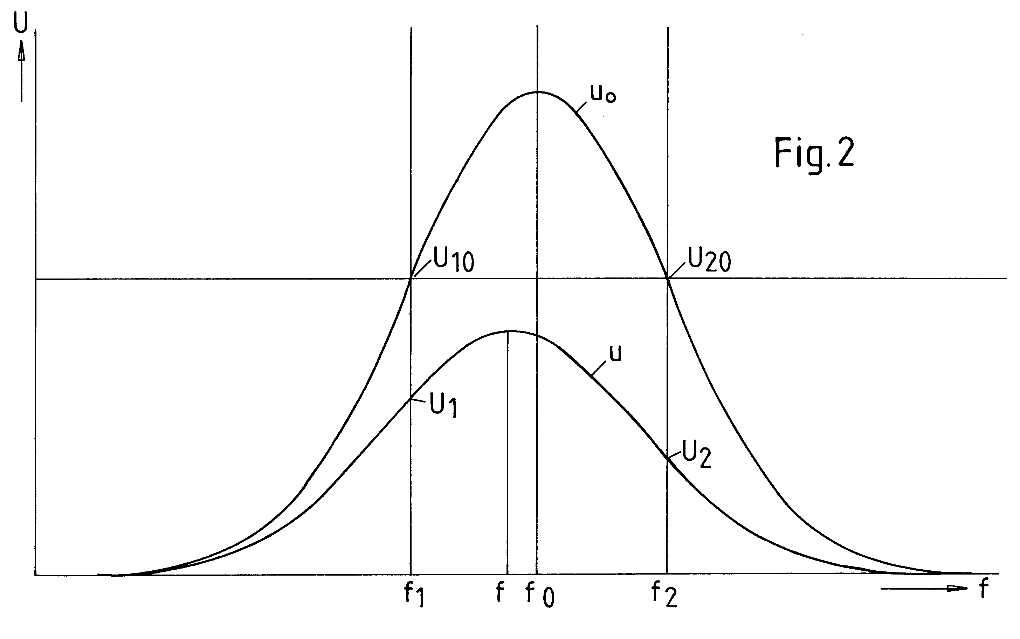

Über das Koaxialkabel 4 werden von dem Generator 3 abgegebene Mikrowellensignale zweier vorzugsweise im GHz-Bereich, z. B. ca. 6 GHz liegender Frequenzen über einen bekannten Zirkulator 18 zur Verhinderung einer Rückkopplung des Resonators 21 auf den Generator 3 der Resonatoranordnung 1 zugeführt. In Figur 1 sind es Mikrowellensignale mit den Frequenzen f1, f2, die symmetrisch zu der Resonanzfrequenz fo einer in Figur 2 mit uo bezeichneten Resonanzkurve für ein von Tabak freies Gehäuse 2 liegen. Die Frequenzen f1, f2 werden entweder nacheinander durch periodisches Umschalten des Generators 3 von einer niedrigen Frequenz f1 auf eine höhere Frequenz f2 und zurück auf f1 usw. erzeugt. Sie können auch von zwei Generatoren mit geringfügig unterschiedlichen Frequenzen aufeinanderfolgend zugeführt werden, wobei die Generatoren aufeinanderfolgend abwechselnd einund ausgeschaltet werden. Schließlich ist es auch möglich, symmetrisch um die Resonanzfrequenz fo frequenzmodulierte Mikrowellensignale zuzuführen (Wobbeln), wobei zum Messen nur die Frequenzen f1 und f2 herangezogen werden.

Die Ausgangssignale der Resonatoranordnung 1 werden über das Koaxialkabel 6 und einen Zirkulator 19 einer Mikrowellendiode 22 zugeführt, die vom Typ HP 8472B der Firma Hewlett-Packard, 71034 Böblingen, Herrenberger Straße 130, DE, sein kann, und das Mikrowellensignal in ein Gleichspannungssignal umsetzt. Das Ausgangssignal U von Diode 22 in Abhängigkeit von unterschiedlichen Frequenzen f des dem Resonator 21 zugeführten Mikrowellensignals zeigt die Resonanzkurve uo für einen Betriebszustand ohne Zigarettenstrang 12 im Gehäuse 2, die Resonanzkurve u für einen Betriebszustand mit Zigarettenstrang 12. Der Zirkulator 19 dient zur Verhinderung einer Rückkopplung der Diode 22 auf den Resonator 21.

Da die Frequenzen f1, f2 symmetrisch zur Resonanzfrequenz fo liegen, sind die von der Mikrowellendiode 22 abgegebenen Signale U1o, U2o gleich groß, ihre Differenzen also null. Enthält das Gehäuse 2 Meßgut, also z. B. einen Zigarettenstrang 12, so ergibt sich sowohl eine Verschiebung der Resonanzfrequenz zu niedrigeren Werten f als auch eine Verringerung der Amplitude, wie sich aus der entsprechenden Kurve u in Fig. 2 ergibt. Die bei den Frequenzen f1, f2 von der Diode 22 abgegebenen Signale U1, U2 haben nun unterschiedliche Größen, so daß die Differenzen nicht mehr null, sondern um so größer sind, je größer die Resonanzfrequenz-Verschiebung ist. Aus den bei beiden Frequenzen f1, f2 gemessenen Signale lassen sich die Dämpfung und die Resonanzfrequenz-Verschiebung berechnen. Damit können wie bei allen HF-Meßverfahren die Masse/Dichte (feuchteunabhängig) und die Feuchte (dichteunabhängig) sowie die Dielektrizitätskonstante in der Auswertanordnung 11 bestimmt werden. Werden entsprechende Signale summiert, so läßt sich die Gesamtmasse, bestehend aus Trockenmasse und Feuchtmasse, ermitteln. Von der Diode 22 gelangen die Ausgangssignale über einen A/D-Umsetzer 23 zu der Auswertanordnung 11. Der A/D-Umsetzer, z. B. vom Typ MX 7672-03 der Firma Maxim Integrated Products, 120 San Gabriel Drive, Sunnyvale, CA, 94086, digitalisiert die Ausgangssignale der Diode 22. Außerdem wirkt er als Torschaltung, da er Signale nur passieren läßt, wenn er von einer Frequenzsteueranordnung 24 über Leitung 25 einen Freigabeimpuls erhält. Die Frequenzsteueranordnung 24 beaufschlagt den Generator 3 mit Spannungsimpulsen unterschiedlicher Höhe, die die Frequenzen der Ausgangssignale beeinflussen, d. h. sie von höheren (f2) zu niederen (f1) und wieder zu höheren (f2) Werten umschalten. Um Übergangserscheinungen auszuschließen, erhält der A/D-Umsetzer 23 nur dann Freigabesignale, wenn die höhere oder niedrigere Frequenz f2 oder f1 wirklich an der Resonatoranordnung 1 anliegt.

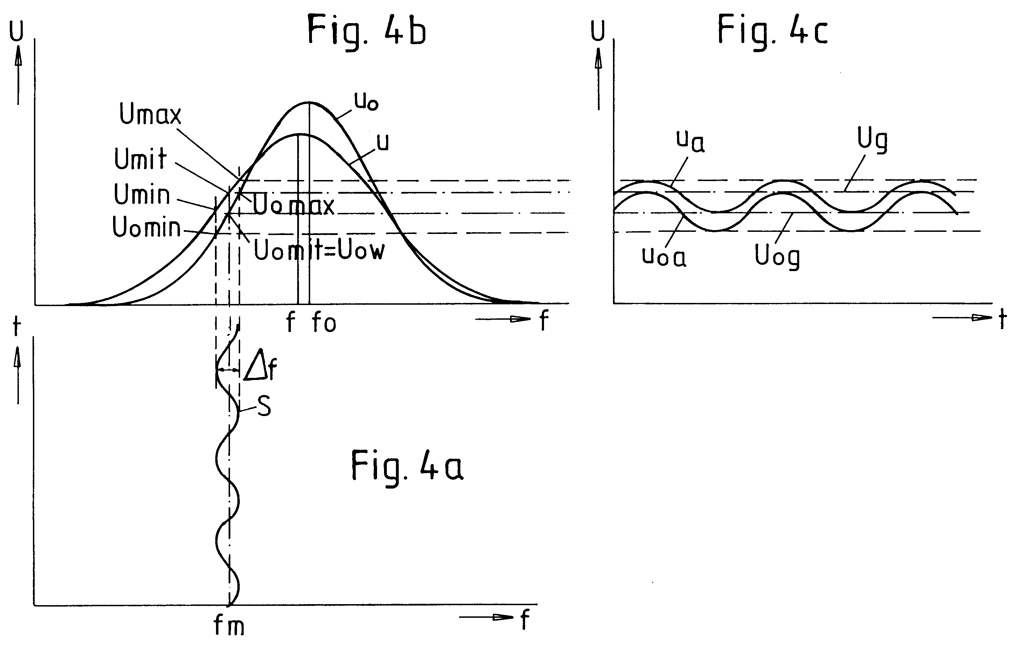

Die Figuren 3 und 4 zeigen eine Variante der Erfindung, bei der die Frequenz des im Gigahertzbereich (z. B. bei ca. 6 GHz) liegenden Mikrowellen-Ausgangssignals eines Generators 3 von einer Frequenzsteueranordnung 24 sinusförmig periodisch geändert wird. Dies zeigt Figur 4a, in der die zeitlichen Änderungen der Frequenzen f dargestellt sind. Die mittlere Frequenz fm wird entsprechend der sinusförmigen Kurve s, die selbst eine Frequenz von z. B. einigen hundert KHz haben kann, im Frequenzbereich Δf konstant geändert. Die mittlere Frequenz fm liegt, wie Figur 4b zeigt, vorzugsweise im Wendepunkt Uow der Resonanzkurve uo, die ohne Tabak im Gehäuse 2 ermittelt wurde. Das Ausgangssignal U der Diode 22, der die Mikrowellen-Signale des Generators 3 über einen Zirkulator 18, eine Resonatoranordnung 1 und einen Zirkulator 19 zugeführt sind, schwankt bei einer Resonatoranordnung ohne Tabak zwischen den Werten Uomin und Uomax. Im belasteten Zustand, also mit Tabak gefüllter Resonatoranordnung 1, bildet sich die Dämpfungskurve u mit den Werten Umin, Umax aus. Uomit und Umit sind Mittelwerte, die bei der Frequenz fm abnehmbar sind. fo ist wieder die Resonanzfrequenz in unbelastetem Zustand der Resonatoranordnung 1, f in belastetem Zustand.

Wie Figur 4c zeigt, sind an der Diode 22 für den unbelasteten Zustand und den belasteten Zustand der Resonatoranordnung 1 Signale U über der Zeit t abnehmbar, die jeweils einen Gleichanteil Uog bzw. Ug und einen Wechselanteil uoa bzw. ua aufweisen.

Aus Figur 3 geht hervor, daß mit dem bei mit Tabak gefüllter Resonatoranordnung 1 von der Diode 22 abgegebenen Signal ein Gleichanteilfilter 26 und Wechselanteilfilter 27 beaufschlagt werden. Über nachgeschaltete A/D-Umsetzer 28 und 29 werden die Ausgangssignale der Filter 26 bzw. 27 digitalisiert und der Auswertanordnung 11 zugeführt.

Durch eine besondere Schaltungsanordnung kann dafür gesorgt werden, daß die Frequenzsteueranordnung 24 über Leitung 31 ein Korrektursignal erhält, sobald die mittlere Frequenz fm aus dem Wendepunkt der Resonanzkurve uo auswandert. Durch das Korrektursignal wird die Frequenz fm des Ausgangssignals des Generators wieder auf den Wert Uow gebracht, der dem Wendepunkt der Resonanzkurve uo entspricht.

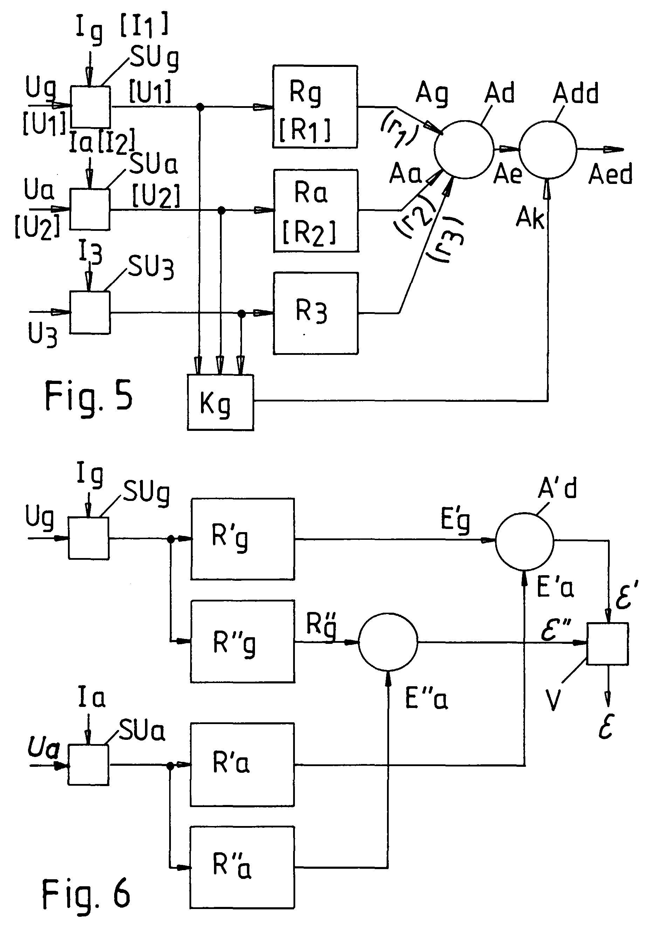

Durch Vergleich zwischen den Gleichanteilen Uog und Ug sowie zwischen den Wechselanteilen uoa und ua in mit Tabak unbelastetem und belastetem Zustand der Resonatoranordnung 1 läßt sich in der Auswertanordnung 11 auf die Eigenschaften des Tabaks (seine Feucht- und Trockenmasse und seine Dielektrizitätskontante) schließen, wie in den Figuren 5 und 6 erläutert wird.

Figur 5 zeigt schematisch die Verarbeitung der Signale Ua, Ug aus den Figuren 4a bis 4c in der Auswertanordnung 11 gemäß Figur 3 zur Ermittlung der Masse/Dichtewerte. Das Signal Ua entspricht im folgenden dem Gleichrichtwert des in Fig. 4c dargestellten Wechselanteils ua. Die Signale werden zunächst in digitalisierter Form in Speichern SUg, SUa abgespeichert. Diese Signale werden von einer Abtastanordnung in einer Folge abgefragt, die bestimmten Inkrementen des Zigarettenstranges 12, z. B. 1 mm, entsprechen. Dies bedeutet, daß bei einer Produktionsgeschwindigkeit des Zigarettenstranges von 10000 jeweils 60 mm langen Zigaretten/Min. die Abtastrate bei 100 Mikrosekunden liegt, also alle 100 Mikrasekunden die Werte (Signale) in den Speichern SUg und SUa abgetastet werden. Mit noch kürzeren Übertragungsimpulsen Ig und Ia werden die Werte in Rechenstufen Rg und Ra übertragen, in denen sie mit Konstanten zu Ausgangswerten Ag und Aa verrechnet werden. Die Verrechnung kann in einem einfachen Fall durch Polynome vom Typ $a + b \, Ug = Ag$ bzw. $c + d \, Ua = Aa$ erfolgen. Die Konstanten a, b, c und d werden durch Parametrierung ermittelt, bei der Zigaretten mit durch Wiegen genau ermittelten Massen/Dichten bezüglich der zugeordneten Ug- und Ua-Werte vermessen werden. Aus den Beziehungen zwischen unterschiedlichen Dichten/Massen und den zugehörigen Werten von Ug und Ua lassen sich die Konstanten ermitteln. Prinzipiell können auch Polynome höherer Ordnung oder auch andere Funktionen Verwendung finden. Die Ausgangssignale Ag und Aa werden einem Additionsglied Ad zugeführt, dessen Ausgangssignal Ae der Dichte/Masse entspricht. Weicht das von Ad abgebene Signal Ae von dem genauen Wert der Masse/Dichte ab, so kann ein Korrekturglied Kg ein empirisch ermitteltes Korrektursignal Ak an ein weiteres Additionsglied Add abgeben, dessen Ausgangssignal Aed dem Dichte/Massewert des Tabakstranges noch genauer entspricht.

In der gleichen Weise kann die Auswertung gemäß einer Schaltungsanordnung der Figur 1 erfolgen, bei der der Mikrowellengenerator 3 zwei Frequenzen f1 und f2 aufeinanderfolgend der Resonatoranordnung 1 zuführt. Die nacheinander abgegebenen Signale können dann wieder in Speichern entsprechend SUg, SUa zur Abtastung gespeichert werden.

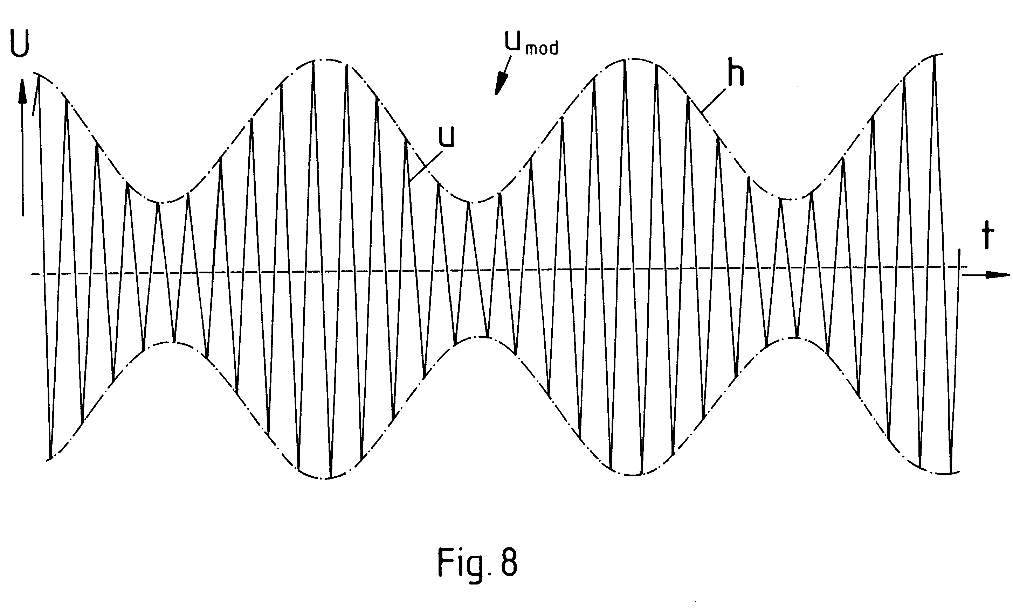

Die Auswertung gemäß einer Schaltungsanordnung der Figur 5 läßt sich durch das Zuschalten eines dritten Speichers SU3 realisieren, wobei den Speichern SUg = SU1 und SUa = SU2 die Signale U1, U2 (Figur 7) zugeführt werden. Die Rechenstufen sind mit R1, R2, R3, ihre Ausgangssignale mit r1, r2, r3 bezeichnet. Die Übertragungsimpulse sind mit I1, I2, I3 bezeichnet.

Eine Auswertung der Meßsignale nach der Tabakfeuchte des Tabakstranges kann prinzipiell auf die gleiche Weise erfolgen. Anstatt mit bestimmten bekannten Gewichten (Dichte/Masse) werden dann Zigaretten mit bestimmten bekannten Feuchtmassen, also mit unterschiedlichen Werten der relativen Feuchte, zur Parametrierung verwendet.

Figur 6 zeigt schematisch die Verarbeitung der Signale Ua, Ug aus den Figuren 4a bis 4c in der Auswertanordnung 11 gemäß Figur 3 zur Ermittlung der Dielektrizitätskonstanten $\varepsilon$ des Zigarettenstranges 12. Hierzu werden die Signale Ug und Ua zunächst in den Speichern SUg und SUa zwischengespeichert. Sie werden, wie bei Figur 3 beschrieben, periodisch und in kurzen Zeitabständen abgetastet, d. h. die Speicherinhalte werden mittels Übertragungsimpulsen Ig und Ia zu den Rechenstufen übertragen. Dabei werden die Werte aus SUg in die Rechenstufe R'g für den Realteil und in die Rechenstufe R"g für den Imaginärteil überführt. In ähnlicher Weise gelangen die Werte aus SUa in die Rechenstufe R'a für den Realteil und R"a für den Imaginärteil. In den Rechenstufen werden die übertragenen Werte mit Konstanten zu Ausgangswerten E'g (Realteil) und E"g (Imaginärteil) sowie E'a (Realteil und E"a (Imaginärteil) verrechnet. Die Verrechnung erfolgt in den Rechenstufen mittels Polynomen, deren Konstante durch Vermessung von Musterzigaretten nach Realteil und Imaginärteil der Dielektrizitätskonstanten bestimmt werden. Die Realteilen entsprechendn Ausgangssignale E'g und E'a werden zu einem Additionsglied A'd, die Imaginärteile E"g und E"a zu einem Additionsglied A"d geführt. Die addierten Signale ergeben den Realteil der Dielektrizitätskonstanten $\varepsilon'$ bzw. deren Imaginärteil $\varepsilon''$. Mit V ist ein an sich bekannte Schaltung zur Bildung der komplexen Größe $\varepsilon$ aus $\varepsilon'$ und $\varepsilon''$ bezeichnet. Durch ein nicht dargestelltes Korrekturglied entsprechend Kg in Figur 5 können im Bedarfsfall empirisch ermittelte Korrektursignale abgegeben werden. Der Wert der komplexen Dielektrizitätskonstanten läßt sich durch vektorielle Addition von $\varepsilon'$ und $\varepsilon''$ ermitteln.

Die Figuren 7 bis 9 zeigen eine Variante der Erfindung, bei der ein Generator 3 ein Mikrowellensignal, vorzugsweise im GHz-Bereich, z. B. bei ca. 6 GHz, abgibt, das als Trägerfrequenz einer Modulationsanordnung 36 zugeführt ist, in der das Mikrowellensignal mit mindestens einem von einem Geber 37 abgegebenen sinusförmigen Signal von erheblich niedrigerer Frequenz amplitudenmoduliert wird. Als Modulator 36 zur Erzeugung eines Zweitfrequenzsignals durch Amplitudenmodulation eignet sich das Bauteil MDC-177 der Fa. Adams Russel Anzac Division, 80 Cambridge Street, Burlington, Maryland, USA. Zahlenbeispiel: 5,8 GHz mit 10 MHz moduliert, ergeben 5,790 GHz und 5,810 GHz. Das gleiche Bauteil kann auch als Mischer 47 verwendet werden, um die GHz-Frequenz herunterzumischen. Zahlenbeispiel: Die Eingangsfrequenzen 5,790 GHz und 5,810 GHz gemischt mit 5,765 GHz ergeben 25 MHz und 45 MHz.

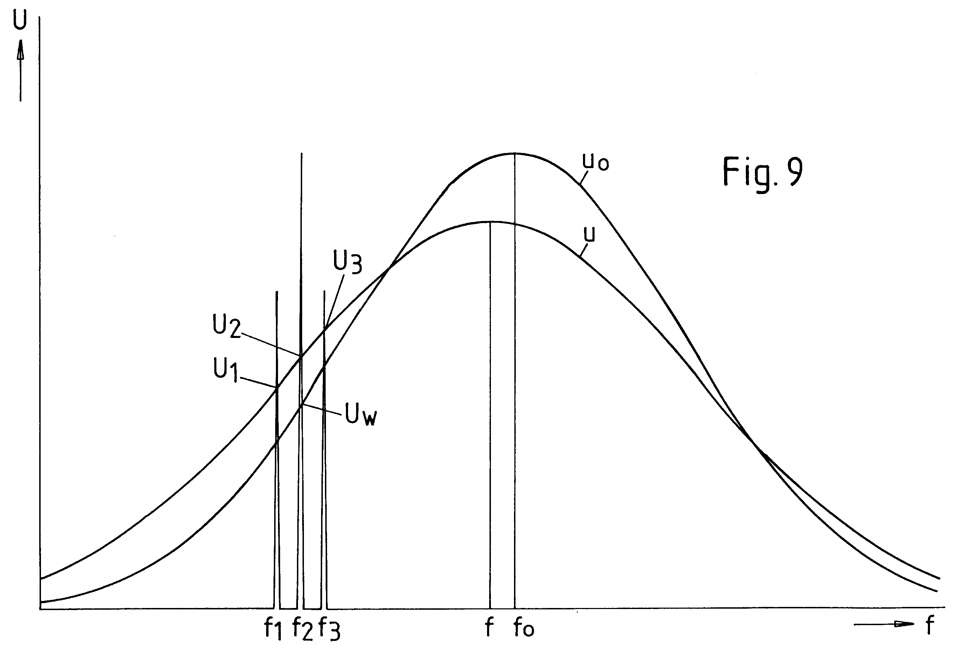

Der Verlauf des amplitudenmodulierten Mikrowellensignals Umod ist in Figur 8 über der Zeit dargestellt. Es besteht aus den hochfrequenten Mikrowellenschwingungen u des Generators 3 und der überlagerten Modulationsschwingung, die eine sinusförmige Hüllkurve h bildet. Das amplitudenmodulierte Mikrowellensignal gelangt über einen Zirkulator 18, eine Resonatoranordnung 1 und einen Zirkulator 19 zu einem Eingang e einer Signalteilungsanordnung 38, z. B. vom Typ HP Power Splitter 11667B der Firma Hewlett-Packard, Herrenberger Straße 130, 71034 Böblingen, DE. Das amplitudenmodulierte Signal ergibt, wie in Figur 9 dargestellt, in dem Beispiel drei Frequenzbänder, nämlich ein Grundfrequenzband f2 und Nebenfrequenzbänder f1, f3. Das Grundfrequenzband wird bezüglich der Resonanzkurve uo für eine leere Resonatoranordnung 1 vorzugsweise so eingestellt, daß sie auf dem Wendepunkt Uw von uo liegt. Die entsprechenden Signale U1, U2 und U3 auf der durch Tabak in der Resonatoranordnung gedämpften Resonanzkurve u, die auch bezüglich ihrer Resonanzfrequenz verschoben ist, werden dadurch ermittelt, daß das Eingangssignal von der Signalteilungsanordnung 38 über drei Ausgänge a, b, c Filteranordnungen 39a, 39b, 39c zugeführt wird, die so eingestellt sind, daß sie jeweils ein Signal eines Frequenzbandes f1, f2, f3 passieren lassen. Die Filteranordnungen können vom Typ MAX 274 Maxim Integrated Products, 120 San Gabriel Drive, Sunnyvale, CA 94086, sein.

Eine jeweils nachgeschaltete Diode 22a, 22b, 22c formt ein Gleichspannungssignal, das jeweils über einen A/D-Umsetzer 41a, 41b, 41c digitalisiert und einer Auswertanordnung 11 zugeleitet wird.

Prinzipiell genügen zwei auf die vorbeschriebene Art ermittelte Signale (U1 U2, U1 U3, U2 U3) der gedämpften Resonatorkurve u für die Bestimmung der Feuchtemasse oder der Trockenmasse. Es können aber hierzu auch drei Signale verwendet werden. Es ist außerdem möglich, mehr als zwei Nebenfrequenzbänder durch Modulation zu bilden und die entsprechenden Signale auszuwerten.

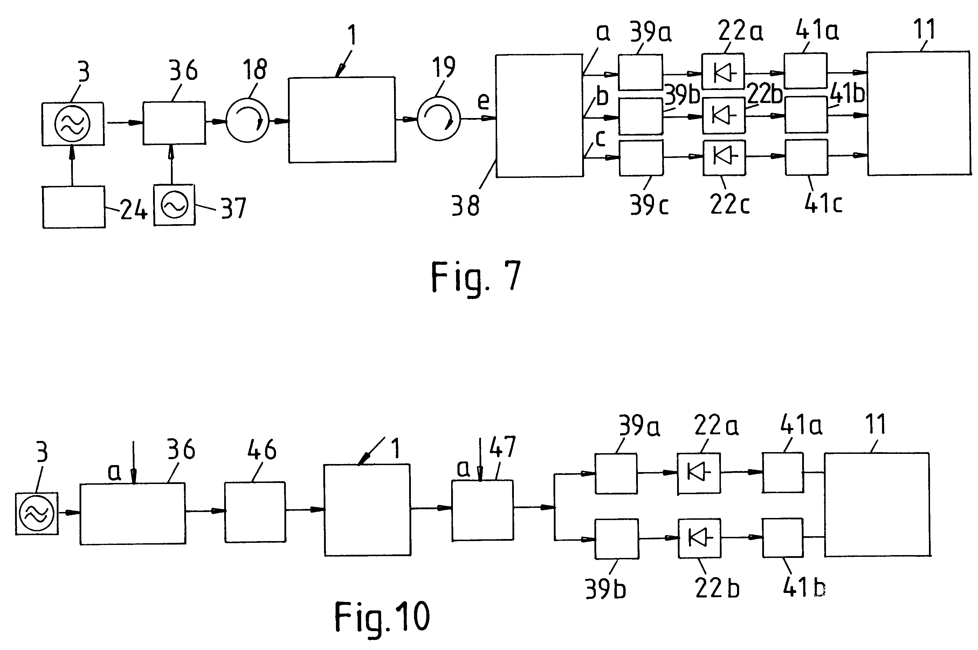

Die Variante gemäß den Figuren 7 bis 9 kann so abgewandelt werden, daß die Mittelfrequenz f2 nicht auf der Flanke der Resonanzkurve uo, sondern auf deren Spitze, also bei fo liegt. In diesem Fall liegen die Nebenfrequenzen f1 und f2 symmetrisch dazu, so daß die zugehörigen Signale U1, U3 entsprechend der Anordnung gemäß Figur 10 ausgewertet werden können.

Figur 10 zeigt eine Variante der Erfindung, bei der ein Generator 3 ein Mikrowellensignal mit im GHz-Bereich liegender Frequenz abgibt. In einem Modulator 36 wird das Signal ähnlich wie bei Figuren 5 und 6 beschrieben durch ein an Eingang a zugeführtes Modulationssignal moduliert, wodurch mehrere Mikrowellensignale mit dicht beieinanderliegenden Frequenzen auftreten, die über einen Verstärker 46 der Resonatoranordnung 1 zugeführt sind. Die Mikrowellensignale liegen, wie anhand der Figuren 1 und 2 beschrieben, symmetrisch zu der Resonanzfrequenz für die leere Resonatoranordnung 1. Prinzipiell ist es aber auch möglich, von zwei Generatoren getrennte Mikrowellensignale unterschiedlicher Frequenzen zuzuführen. Die Entkopplung kann wieder über nicht dargestellte Zirkulatoren (entsprechend 18 und 19 in den vorhergehenden Figuren) erfolgen.

Nach Beeinflussung der Mikrowellensignale in der von dem Zigarettenstrang durchsetzten Resonatoranordnung 1 werden die hohen Frequenzen der Mikrowellensignale in einem sogenannten Mischer 47 durch ein an seinem Eingang a zugeführtes Signal erheblich herabgesetzt. Zwei ausgewählte charakterische Signale mit erheblich niedrigeren Frequenzen werden über Filteranordnungen 39a, 39b Dioden 22a, 22b zugeführt, die entsprechende Gleichspannungen abgeben. Diese werden durch A/D-Umsetzer 41a, 41b digitalisiert und danach einer Auswertanordnung 11 zugeführt. Durch die Frequenzerniedrigung können einfachere und schärfere Filter für die ausgewählten Frequenzbänder eingesetzt werden.

Die Signale der Mikrowellendioden 22 sind von der Tabaktemeratur abhängig. Zur Kompensation kann gemäß der Erfindung die Tabaktemperatur mit einem bekannten Verfahren abgetastet werden, z. B. mittels eines Temperaturfühlers in der Resonatoranordnung 1. Der Temperaturfühler kann aber auch in einem vorgeordneten Bereich der Zigarettenmaschine, in der der Tabakstrang 12 erzeugt wird, z. B. in deren Verteiler, eingebaut sein. Es kann sogar ein IR-Strahlungsthermometer verwendet werden, das auf die Enden der Zigaretten nach deren Abschneiden von dem Zigarettenstrang gerichtet ist und die Temperatur des Tabaks direkt erfaßt.

Zur Vermeidung von Wasserkondensation in der Resonatoranordnung kann gemäß der Erfindung letztere beheizt werden.

Eine Drift des Meßsystems kann gemäß der Erfindung durch Referenzdioden oder, falls notwendig, durch eine zusätzliche Resonatoranordnung kompensiert werden.

Im Rahmen der Erfindung liegt auch eine Abwandlung der Resonatoranordnung 1, bei der das metallische Gehäuse 2 nicht geschlossen ist, sondern mindestens eine für Mikrowellen durchlässige Fläche, z. B. aus Keramik, aufweist, durch die Mikrowellen in ein angrenzendes Medium, das z. B. aus Schnittabak bestehen kann, gelangen kann. Auf diese Weise lassen sich auch Stoffe, die nicht in geschlossenen mit Hüllmaterial umhüllten Strängen wie der Zigarettenstrang 12 vorliegen, sondern z. B. als Schüttgut, bezüglich ihrer Masse/Dichte und/oder ihrer Feuchte oder ihre Dielektrizitätskonstanten vermessen.

**Patentansprüche**

1. Verfahren zum Erfassen mindestens einer Eigenschaft eines Stoffes durch Auswertung der durch die Anwesenheit des Stoffes verursachten Verstimmung eines HF-Resonators, dem Mikrowellen zugeführt werden, und von dem ein hochfrequentes, von dem Stoff beeinflußtes Signal abgenommen wird, dessen Resonanzfrequenz-Verschiebung und Dämpfung gegenüber einem von dem Stoff unbeeinflußten Signal erfaßt wird, dadurch gekennzeichnet, daß dem Resonator Mikrowellen mit mindestens zwei unterschiedlichen Frequenzen zugeführt werden, daß die Resonanzfrequenz-Verschiebungen durch Vergleich der von dem Stoff unbeeinflußten und beeinflußten Resonanzkurven des Resonators erfaßt werden und daß die Dämpfung durch Vergleich der Amplituden der Resonanzkurven bei den Frequenzen der zugeführten Mikrowellen erfaßt wird.

2. Verfahren nach Anspruch 1, dadurch gekennzeichnet, daß dem Resonator Mikrowellen von mindestens zwei Frequenzen ständig zugeführt werden.

3. Verfahren nach Anspruch 1, dadurch gekennzeichnet, daß die Frequenzen der Mikrowellen periodisch geändert werden.

4. Verfahren nach Anspruch 3, dadurch gekennzeichnet, daß die Frequenzen der Mikrowellen durch ständiges Umschalten von niederen zu höheren und wieder zurück zu niederen Werten periodisch geändert werden.

5. Verfahren nach Anspruch 3, dadurch gekennzeichnet, daß die Frequenzen der Mikrowellen durch ständiges und kontinuierliches Ändern von niederen zu höheren und wieder zurück zu niederen Werten (Wobbeln) mit geringerer Frequenz geändert werden.

6. Verfahren nach einem oder mehreren der vorhergehenden Ansprüche, dadurch gekennzeichnet, daß dem Resonator Mikrowellen von mindestens zwei Frequenzen zugeführt werden, die symmetrisch zu der von dem Stoff unbeeinflußten Resonanzfrequenz den abfallenden Flanken der Resonanzkurve zugeordnet sind.

7. Verfahren nach Anspruch 5, dadurch gekennzeichnet, daß dem Resonator Mikrowellen von mindestens zwei Frequenzen zugeführt werden, die beide einer abfallenden Flanke der Resonanzkurve zugeordnet sind.

8. Verfahren nach Anspruch 7, dadurch gekennzeichnet, daß die zwischen Grenzwerten ständig kontinuierlich geänderten Frequenzen der Mikrowellen vorzugsweise sinusförmig mit geringerer Frequenz geändert(gewobbelt) werden.

9. Verfahren nach Anspruch 8, dadurch gekennzeichnet, daß die Verschiebung der Resonanzkurve und der in einer Amplitudenverringerung zum Ausdruck kommenden Dämpfung durch Ausgangssignale ermittelt werden, die einen Gleichanteil und einen mit der vorzugsweise sinusförmigen Wobbelfrequenz sich ändernden Wechselanteil aufweisen.

10. Verfahren nach Anspruch 9, dadurch gekennzeichnet, daß das einem Gleichanteil entsprechende Ausgangssignal (Ug) sowie das dem Wechselanteil entsprechende Ausgangssignal (Ua) jeweils einer Rechenstufe zugeführt wird, in der die Signale in Polynomen zusammen mit Konstanten zu Teilsignalen verrechnet werden, die durch Addition den Endwert ergeben.

11. Verfahren nach Anspruch 10, dadurch gekennzeichnet, daß die Ermittlung der Konstanten durch Parametrierung anhand von Referenzwerten des Stoffes erfolgt, der - je nach zu ermittelnder Größe - bezüglich seiner Dichte/Masse oder seiner Feuchte oder seiner Dielektrizitätskonstanten vermessen wird.

12. Verfahren nach einem oder mehreren der Ansprüche 7 bis 11, dadurch gekennzeichnet, daß die Grenzfrequenzen der Mikrowellen, deren Frequenzen ständig und kontinuierlich von niederen zu höheren und wieder zu niederen Werten geändert (gewobbelt) werden, zumindest annähernd symmetrisch zu einem Wendepunkt einer abfallenden Flanke der Resonanzkurve gehalten werden.

13. Verfahren nach einem oder mehreren der vorhergehenden Ansprüche, dadurch gekennzeichnet, daß die unterschiedlichen Frequenzen der Mikrowellen dadurch erzeugt werden, daß die Amplitude einer Mikrowellenschwingung vorzugsweise sinusförmig mit geringerer Frequenz moduliert wird.

14. Verfahren nach Anspruch 13, dadurch gekennzeichnet, daß die Grundfrequenz der sich ergebenden Frequenzbänder auf einer abfallenden Flanke der Resonanzkurve, vorzugsweise in deren Wendepunkt, gehalten wird.

15. Verfahren nach einem oder mehreren der vorhergehenden Ansprüche, dadurch gekennzeichnet, daß dem Resonator Mikrowellen zweier vorzugsweise durch Modulation erzeugter Frequenzen ständig zugeführt werden, daß danach die Mikrowellenfrequenzen erheblich untersetzt werden und daß anschließend durch Filtern ausgewählter unterschiedlicher Frequenzbereiche Größen, die für die durch den Stoff beeinflußte Resonanzfrequenz-Verschiebung und Dämpfung charakteristisch sind, ermittelt werden.

16. Verfahren nach einem oder mehreren der vorhergehenden Ansprüche, dadurch gekennzeichnet, daß die Dichte/Masse von Schnittabak, insbesondere in einem Zigarettenstrang, erfaßt wird.

17. Verfahren nach einem oder mehreren der vorhergehenden Ansprüche, dadurch gekennzeichnet, daß die Feuchte/Masse von Schnittabak, insbesondere in einem Zigarettenstrang, erfaßt wird.

18. Verfahren nach einem oder mehreren der vorhergehenden Ansprüche, dadurch gekennzeichnet, daß die Dielektrizitätskonstante ( $\varepsilon$ ) von Schnittabak, insbesondere in einem Zigarettenstrang, erfaßt wird.

19. Anordnung zum Erfassen mindestens einer Eigenschaft eines Stoffes, mit einem Resonator, dem von einem Generator Mikrowellen zuführbar sind, und von dem ein hochfrequentes von dem Stoff beeinflußtes Signal zum Erfassen seiner Resonanzfrequenz-Verschiebung und Dämpfung gegenüber dem von dem Stoff unbeeinflußten Signal abnehmbar und einer Auswertschaltung zuführbar ist, gekennzeichnet durch eine Zufuhr von Mikrowellen mit mindestens zwei unterschiedlichen Frequenzen von dem Generator zu dem Resonator und durch eine Resonanzfrequenz -Verschiebungen durch Vergleich der von dem Stoff beeinflußten Resonanzkurve gegenüber der von dem Stoff unbeeinflußten Resonanzkurve sowie die Dämpfung durch Vergleich der Amplituden der von dem Stoff beeinflußten und unbeeinflußten Resonanzkurven erfassende Schaltungsanordnung.

20. Anordnung nach Anspruch 19, gekennzeichnet durch eine ständige Zufuhr von Mikrowellen mit mindestens zwei Frequenzen von dem Generator zu dem Resonator.

21. Anordnung nach Anspruch 20, gekennzeichnet durch eine periodische Änderung der Frequenzen der Mikrowellen.

22. Anordnung nach Anspruch 19, gekennzeichnet durch eine Umschaltanordnung zum ständigen Umschalten der Frequenzen der Mikrowellen von niederen zu höheren und wieder zu zurück zu niederen Werten zwecks periodischer Frequenzänderungen.

23. Anordnung nach Anspruch 19, gekennzeichnet durch eine Wobbelanordnung zum ständigen und kontinuierlichen Ändern der Frequenzen der Mikrowellen von niederen zu höheren und wieder zu zurück zu niederen Werten (Wobbeln).

24. Anordnung nach einem oder mehreren der Ansprüche 19 bis 23, gekennzeichnet durch die Zufuhr von Mikrowellen von mindestens zwei Frequenzen zu dem Resonator, die symmetrisch zu der von dem Stoff unbeeinflußten Resonanzfrequenz den abfallenden Flanken der Resonanzkurve zugeordnet sind.

25. Anordnung nach Anspruch 23, gekennzeichnet durch die Zufuhr von Mikrowellen von mindestens zwei Frequenzen zu dem Resonator, die beide einer abfallenden Flanke der Resonanzkurve zugeordnet sind.

26. Anordnung nach Anspruch 25, gekennzeichnet durch eine Wobbelanordnung zum vorzugsweise sinusförmigen Ändern der Frequenzen der Mikrowellen zwischen Grenzwerten.

27. Anordnung nach Anspruch 26, gekennzeichnet durch eine Schaltungsanordnung zum Erfassen von Gleichanteilen und Wechselanteilen des abgenommenen der Resonanzfrequenz-Verschiebung und der Dämpfung entsprechenden Signals.

28. Anordnung nach einem oder mehreren der Ansprüche 25 bis 27, gekennzeichnet durch eine Lage der Grenzfrequenzen der Mikrowellen, deren Frequenzen ständig und kontinuierlich von niederen zu höheren und wieder zu niederen Werten geändert (gewobbelt) werden, die zumindest annähernd symmetrisch zu einem Wendepunkt einer abfallenden Flanke der Resonanzkurve.

29. Anordnung nach einem oder mehreren der Ansprüche 23 bis 28, gekennzeichnet durch von dem einem Gleichanteil entsprechenden Ausgangssignal (Ug) und dem einem Wechselanteil entsprechenden Ausgangssignal (Ua) beaufschlagte Rechenstufen (Rg, Ra), in denen die Signale in Polynomen zusammen mit Konstanten zu Teilsignalen verrechnet werden, die durch Addition den Endwert ergeben.

30. Anordnung nach Anspruch 29, gekennzeichnet durch Ermittlung der Konstanten mittels Parametrierung anhand von Referenzwerten des Stoffes, der - je nach zu ermittelnder Größe - bezüglich seiner Dichte/Masse oder seiner Feuchte oder seiner Dielektrizitätskonstanten vermessen wird.

31. Anordnung nach einem oder mehreren der Ansprüche 19 bis 30, gekennzeichnet durch eine Modulationsanordnung zum vorzugsweise sinusförmigen Modulieren der Frequenzen der Mikrowellen mit geringerer Frequenz.

32. Anordnung nach Anspruch 31, gekennzeichnet durch eine Grundfrequenz der sich durch die Modulation ergebenden Frequenzbänder auf einer abfallenden Flanke der Resonanzkurve, vorzugsweise in deren Wendepunkt.

33. Anordnung nach einem oder mehreren der Ansprüche 19 bis 32, gekennzeichnet durch eine ständige Zufuhr von Mikrowellen zweier vorzugsweise durch Modulation erzeugter Frequenzen, durch eine nachgeschaltete Frequenzuntersetzungsstufe für die beiden Signale und durch eine nachgeschaltete Filteranordnung zum Filtern ausgewählter untersetzter Frequenzbereiche zur Ermittlung von Größen, die für die von dem Stoff beeinflußte Resonanzfrequenz-Verschiebung und Dämpfung charakteristisch sind.

34. Anordnung nach einem oder mehreren der Ansprüche 19 bis 33, dadurch gekennzeichnet, daß der Resonator (21) in einem Gehäuse (2) aus Metall angeordnet ist, das jeweils eine Einlaßöffnung (7) sowie eine Auslaßöffnung (9) zum Durchleiten eines Stranges der tabakverarbeitenden Industrie, insbesondere eines Zigarettenstranges (12), aufweist.

35. Anordnung nach Anspruch 34, dadurch gekennzeichnet, daß das Gehäuse (2) rotationssymmetrisch, vorzugsweise zylindrisch, ausgebildet ist.

36. Anordnung nach einem oder mehreren der Ansprüche 19 bis 35, dadurch gekennzeichnet, daß in dem Gehäuse (2) ein dielektrischer Festkörperresonator (21) angeordnet ist.

37. Anordnung nach Anspruch 36, dadurch gekennzeichnet, daß der Festkörperresonator (21) mit einem Durchlaß (23) für den Zigarettenstrang (12) versehen ist.

38. Anordnung nach einem oder mehreren der Ansprüche 19 bis 37, dadurch gekennzeichnet, daß eine das Gehäuse (2) und gegebenenfalls den Festkörperresonator (21) durchsetzende geschlossene rohrartige Führung (13) für den Zigarettenstrang (12) vorgesehen ist.

39. Anordnung nach einem oder mehreren der Ansprüche 19 bis 38, dadurch gekennzeichnet, daß rohrförmige Stutzen (14a, 14b) aus leitfähigem Material, insbesondere Metall, die Rohrführung an dem Ein- und Auslaß des Gehäuses (2) umgeben.

40. Anordnung nach einem oder mehreren der Ansprüche 19 bis 39, dadurch gekennzeichnet, daß ein weiterer baugleicher, vorzugsweise in einem gleichartigen Gehäuse angeordneter Resonator vorgesehen ist, der in gleicher Weise mit Mikrowellen beaufschlagt ist und von dem ein von einem Referenzmedium beeinflußtes Mikrowellensignal zwecks Kompensation von Störgrößen abnehmbar ist.

41. Anordnung nach einem oder mehreren der Ansprüche 19 bis 40, gekennzeichnet durch eine Erfassung der Dichte/Masse von Schnittabak, insbesondere von einem Zigarettenstrang.

42. Anordnung nach einem oder mehreren der Ansprüche 19 bis 40, gekennzeichnet durch eine Erfassung der Feuchte von Schnittabak, insbesondere in einem Zigarettenstrang.

43. Anordnung nach einem oder mehreren der Ansprüche 19 bis 42, gekennzeichnet durch eine Erfassung der Dielektrizitätskunstanten ( $\varepsilon$ ) von Schnittabak, insbesondere in einem Zigarettenstrang.

Fig. 1

Fig. 3

Fig.2

EP 0 791 823 A2

Fig. 4c

Fig. 4b

Fig. 4a

Fig. 5

Fig. 6

Fig. 8

Fig. 9

EP 0 791 823 A2

Fig. 7

Fig.10

EP 0 791 823 A2